# EUROPEAN PATENT SPECIFICATION

(11) **EP 2 512 196 B1**
(45) Date of publication and mention of the grant of the patent: **11.12.2019**
(21) Application number: 12176051.6
(22) Date of filing: 29.07.2009
(51) Int. Cl.: H04W 68/00

(54) **Paging method, network element, management network element and communication system**
Paging-Verfahren, Netzwerkelement, Verwaltungsnetzwerkelement und Kommunikationssystem
Procédé de radiomessagerie, élément de réseau, élément de réseau de gestion et système de communication

(30) Priority: 07.08.2008 CN 200810135277; 28.09.2008 CN 200810169217
(43) Date of publication of application: 17.10.2012
(62) Divisional of application: 09804476.1
(73) Proprietor: Huawei Technologies Co., Ltd., Longgang District Shenzhen, Guangdong 518129 (CN)
(72) Inventor: Wu, Wenfu, Shenzhen Guangdong 518129 (CN); Hu, Weihua, Shenzhen Guangdong 518129 (CN)
(74) Representative: Körber, Martin Hans

(56) References cited:
- TELECOM ITALIA ET AL: "Pseudo-CR on Option C for CSG deployments", 3GPP DRAFT; C1-082792, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Zagreb, Croatia; 20080630, 30 June 2008 (2008-06-30), XP050029985,
- NOKIA SIEMENS NETWORKS ET AL: "HeNB and CSG addressing", 3GPP DRAFT; R3-081322, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Kansas City, USA; 20080430, 30 April 2008 (2008-04-30), XP050164495,
- HUAWEI: "Paging optimization for CSG deployments", 3GPP DRAFT; C1-083436, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest, Hungary; 20080822, 22 August 2008 (2008-08-22), XP050308631,

## Description

### TECHNICAL FIELD

The present invention relates to a communication network technology, and in particular to a paging method, network element (NE), management NE, and communication system.

### BACKGROUND

With the rapid development of network technologies, Internet access technology is being improved continuously. Home access is a new access mode that is being researched by the 3rd generation partnership project (3GPP) and the non-3GPP standards organizations.

A home access mode uses the home wireless access point (AP) and licensed spectrum to enable the user equipment (UE) to access the mobile network through the universal IP access network. The licensed spectrum includes spectrums used on multiple types of networks, such as UMTS terrestrial radio access network (UTRAN), evolved UMTS terrestrial radio access network (E-UTRAN), code division multiple access (CDMA) network, worldwide interoperability for microwave access (WiMAX) network, wireless local area network (WLAN), and high rate packet data (HRPD) network.

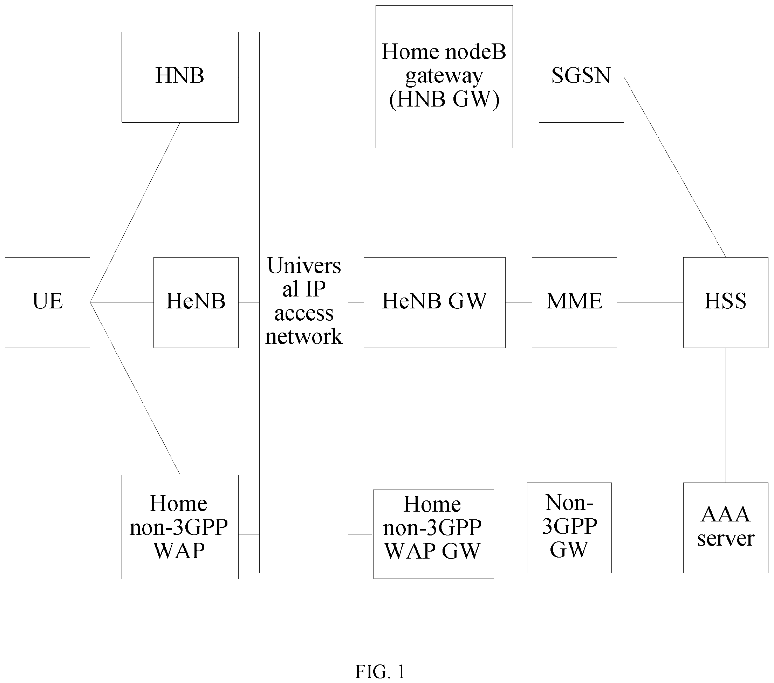

FIG. 1 illustrates the architecture of an exemplary home access system. A home NodeB (HNB) is a home wireless AP (WAP) operating on the UTRAN spectrum. A home evolved NodeB (HeNB) is a home wireless AP operated on the E-UTRAN spectrum. A home non-3GPP wireless AP (home non-3GPP WAP) is a home WAP operated on the non-3GPP network (such as CDMA/Wimax/WLAN/HRPD network) spectrum.

A home NodeB gateway (HNB GW), a home evolved NodeB GW (HeNB GW), and a home non-3GPP WAP gateway (home non-3GPP WAP GW) are the GWs of the home WAPs of the HNB, HeNB and home non-3GPP WAP that are connected through the universal IP access network.

The GW of the home AP implements the functions of managing the home AP and controlling the access, converging the home AP, routing and forwarding the signaling data between the home AP and a NE on a mobile network.

The NEs on the mobile network include: mobility management entity (MME) on the E-UTRAN network, serving GPRS supporting node (SGSN) on the GPRS/UMTS network, and non-3GPP GWs including multiple types of implementation entities on the non-3GPP network, such as an evolved packet data gateway (EPDG) on the WLAN network, a access service network gateway (ASN GW) on the WiMAX network, a access gateway (AGW) on the CDMA network, and an HRPD Serving gateway (HSGW) on the HRPD network.

A home subscriber server (HSS) stores the subscription information about the UE. An authentication, authorization, and accounting (AAA) server carries out the access authentication, authorization, and accounting.

An exemplary architecture of the home access system is only described above. In another home access system, a home AP may be directly connected to a NE on the mobile network.

A closed subscriber group (CSG) is introduced to restrict the access of a UE to a special home WAP. The CSG identifies some UEs (or users), which are allowed to access one or more cells of the operators. But other UEs are not allowed to access these cells. One CSG area includes one or more cells and is identified by a CSG identification (ID). One CSG area can be accessed by only a group of UEs, and other UEs not in this group are not allowed to access the CSG area. An allowed CSG list constructed from the CSG IDs of all the CSG areas that is allowed to access by a UE may be also called a CSG white list. The mobility management NE (SGSN or MME) or the non-3GPP GW and the UE store the allowed CSG list of the UE.

A mobility list mechanism is introduced in order to reduce the update of the location area, for example, tracking area update (TAU) on the E-UTRAN, and routing area update on the UTRAN. Each location area is labeled with a location area ID, for example, tracking area identity (TAI) or routing area identity (RAI). The mobility list includes one or more location area IDs. The moving of the UE among the location areas in the mobility list does not trigger the location update program. The UE mobility list is maintained and sent to the UE by the SGSN, MME, or non-3GPP GW.

When mobility management NE (SGSN, MME), or non-3GPP GW sends a paging message to a UE, the mobility management NE (SGSN, MME) or non-3GPP GW sends the paging message to a home AP of all location areas in a mobility list, and the home AP broadcasts the paging message through an air interface.

The prior art has at least the following disadvantage:
One location area may include thousands of home APs, and a mobility list of UE usually includes multiple location areas. Therefore, the number of home APs is huge; and the usage of home APs for users is limited. In the prior art, a paging message is sent to the home AP in all location areas in the mobility list, producing a great number of unnecessary paging messages. This occupies lots of bandwidth resources and increases the consumption of the system resource.

Document 3GPP C1-082792 relates to a method according to which the MME shall be provided with the CSG ID of the serving cell in the message containing the service request received from the Home eNodeB. The MME shall initiate paging of the UE in all cells, and for paging optimization the MME can page the UE in the CSG where the UE has been registered.

Document 3GPP R3-081322 relates to LTE cell and eNB identification for the non CSG case, and discloses a concept summary for the CSG case.

### SUMMARY

The invention is set out in the appended set of claims.

Aspects of the present disclosure provide a paging method, network element (NE), management NE, and communication system to reduce paging messages and save system resource effectively.

To achieve the preceding objective, aspect of the present disclosure provide the technical solutions as follows:
One aspect of the present disclosure provides a paging method, which includes:
receiving, by a management NE, a CSG ID supported by an NE sent from the access NE, or a CSG ID supported by a GW sent from the access GW;
obtaining, by a management NE, an access NE to be paged according to the CSG ID supported by the access NE, or an access GW to be paged according to the CSG ID supported by the access GW; and
sending, by a management NE, a paging message to the obtained access NE or the obtained access GW to be paged, wherein the obtaining an access NE to be paged according to the CSG ID supported by the access NE comprises: obtaining a CSG ID to be paged, wherein the obtaining (3311) of the CSG ID to be paged comprises: determining whether a location area ID corresponding to the CSG ID in the allowed CSG list of the UE is in a mobility list of the UE; if the location ID is in the mobility list, taking the CSG ID as the CSG ID to be paged; wherein if the CSG ID supported by the access NE corresponds to the CSG ID to be paged, the access NE is the access NE to be paged, the method further including: generating a CSG ID data table, by the management NE, according to the CSG ID supported by the access NE, the table including the CSG ID and information about the access NE corresponding to the CSG ID; and obtaining the information about the access NE corresponding to CSG ID by querying the data table according to the CSG ID to be paged; and wherein the obtaining an access GW to be paged according to the CSG ID supported by the access GW comprises: obtaining a CSG ID to be paged, wherein the obtaining of the CSG ID to be paged comprises:
   determining whether a location area ID corresponding to the CSG ID in the allowed CSG list of the UE is in a mobility list of the UE; if the location ID is in the mobility list, taking the CSG ID as the CSG ID to be paged; wherein if the CSG ID supported by the access GW corresponds to the CSG ID to be paged, the access GW is the access GW to be paged; the method further including: generating, by the access GW, a CSG ID data table according to the CSG ID reported by the access NE, the table including the CSG ID and information about the access NE corresponding to the CSG ID; obtaining, by the access GW, the information about the access NE corresponding to CSG ID by querying the data table according to the CSG ID included in the paging message, and sending, by the access GW, the paging message to the access NE.

One aspect of the present disclosure provides a management NE, which includes:
a receiving unit, configured to receive a CSG ID supported by an NE sent from the access NE, or receive a CSG ID supported by a GW sent from the access GW;
a paging NE obtaining unit, configured to obtain an access NE to be paged according to the CSG ID supported by the access NE, or obtain an access GW to be paged according to the CSG ID supported by the access GW; and
a paging unit, configured to send a paging message to the obtained access NE or the obtained access GW to be paged,
wherein the paging NE obtaining unit is further configured to obtain a CSG ID to be paged, the paging NE obtaining unit (82) is configured to determine whether a location area ID corresponding to the CSG ID in the allowed CSG list of the UE is in a mobility list of the UE; if the location ID is in the mobility list, the paging NE obtaining unit (82) is configured to take the CSG ID as the CSG ID to be paged; and if the CSG ID supported by the access NE or the access GW corresponds to the CSG ID to be paged, take the access NE or the access GW as the access NE or the access GW to be paged;
wherein the management NE is further configured to: generate a CSG ID data table according to the CSG ID reported by the access NE, the table including the CSG ID and information about the access NE corresponding to the CSG ID; and obtain the information about the access NE corresponding to CSG ID by querying the data table according to the CSG ID to be paged.

One aspect of the present disclosure provides a communication system, which includes an access NE and a management NE:
the access NE, configured to report a CSG ID supported by the access NE to a management NE; receive a paging message from the management NE, and send the paging message; and
the management NE, configured to receive the CSG ID supported by the access NE, obtain an access NE to be paged according to the CSG ID supported by the access NE; and send a paging message to the obtained access NE to be paged;
wherein the management NE obtaining the access NE to be paged according to the CSG ID supported by the access NE is configured to: obtain a CSG ID to be paged, and determine whether a location area ID corresponding to the CSG ID in the allowed CSG list of the UE is in a mobility list of the UE; if the location ID is in the mobility list, the management NE (1101) is configured to take the CSG ID as the CSG ID to be paged; wherein if the CSG ID supported by the access NE corresponds to the CSG ID to be paged, the access NE is the access NE to be paged;
wherein the management NE is further configured to: generate a CSG ID data table according to the CSG ID reported by the access NE, the table including the CSG ID and information about the access NE corresponding to the CSG ID; and obtain the information about the access NE corresponding to CSG ID by querying the data table according to the CSG ID to be paged.With the technical solution provided by aspects of the present disclosure, the paging message is sent in certain areas that may be used by a UE through the allowed CSG list of the UE to be paged. This solves the problem in the prior art where the resources are wasted because the paging message needs to be sent in all the CSG areas of all the location areas in the mobility list. Therefore, the paging messages and the system resource consumption are reduced effectively.

### BRIEF DESCRIPTION OF THE DRAWINGS

FIG. 1 is the structural view of a home access system in the prior art;
FIG. 2 is the flow chart of a paging method according to Embodiment 1 of the present disclosure;
FIG. 3 is the flow chart of a paging method according to Embodiment 2 of the present disclosure;
FIG. 4 is the flow chart of another paging method according to Embodiment 2 of the present disclosure;
FIG. 5 is the flow chart of a paging method according to Embodiment 5 of the present disclosure;
FIG. 6 is the flow chart of another paging method according to Embodiment 5 of the present disclosure;
FIG. 7 is the structural view of an NE according to Embodiment 1 of the present disclosure;
FIG. 8 is the structural view of a management NE according to Embodiment 1 of the present disclosure;
FIG. 9 is the structural view of an NE according to Embodiment 2 of the present disclosure;
FIG. 10 is the structural view of a management NE according to Embodiment 2 of the present disclosure;
FIG. 11 is the structural view of a communication system according to Embodiment 1 of the present disclosure; and
FIG. 12 is the structural view of a communication system according to Embodiment 2 of the present disclosure.

### DETAILED DESCRIPTION OF THE EMBODIMENTS

For a clear illustration of the technical solution disclosed in various embodiments of the present disclosure, the following section describes in detail the embodiments of the present disclosure in combination with the accompanying drawings. The embodiments described as follows are only exemplary embodiments of the present disclosure. Other embodiments may be made by those skilled in the art according to these embodiments of the present disclosure without any creative effort.

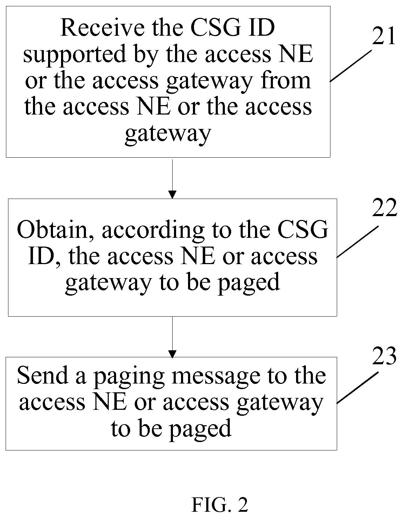

Embodiment 1 of the present disclosure provides a paging method. As shown in FIG. 2, the paging method includes as follows:
Step 21: A closed subscriber group (CSG) ID supported by an access network element (NE) or an access gateway (GW) is received from the access NE or the access GW.
Step 22: An access NE or access GW to be paged is obtained according to the CSG ID.
Step 23: A paging message is sent to the access NE or access GW to be paged.

With the technical solution provided by Embodiment 1 of the present disclosure, the access NE or access GW to be paged is obtained and the paging message is sent in certain areas that may be used by a user equipment (UE). This solves the prior-art problem where the resources are wasted because the paging message needs to be sent in all the CSG areas of all the location areas in a mobility list. Therefore, the paging messages and the system resource consumption are reduced effectively.

The following section describes the paging method according to Embodiment 2 of the present disclosure.

Embodiment 2 of the present disclosure provides at least two paging methods, which are different from each other in that the connection modes of the involved network entities in the paging process are different.

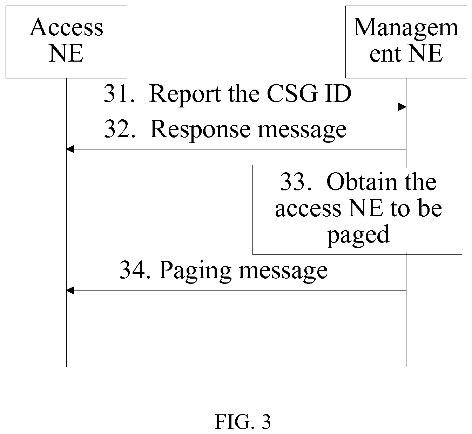

In one paging method, a access NE and a management NE are directly connected, as shown in FIG. 3.

The access NE provided in Embodiment 2 includes at least one of a home NodeB (HNB), a home evolved NodeB (HeNB), a home non-3GPP wireless access point (Home non-3GPP WAP), NB supporting the CSG function (that is, only a group of UEs can access the NB, eNB, or non-3GPP WAP and the access of other UEs is not allowed), evolved NodeB (eNB), and non-3GPP WAP.

The management NE includes a mobility management NE, for example, serving GPRS supporting node (SGSN), mobility management entity (MME), and various types of non-3GPP GW, such as at least one of the evolved packet data GW (EPDG), access service network GW (ASN GW), access GW (AGW), and HRPD Serving GW (HSGW).

Step 31: The access NE directly reports the CSG ID to the management NE.

The access NE reports its supported (in some embodiments, also using "used" instead of "supported", hereinafter using "supported" for unification) CSG ID while reporting its supported location area ID. Two methods are used for reporting the CSG ID or the location area ID.

Method 1: A setup request message reporting the location area ID includes the CSG ID.

To use the existing resources sufficiently, the existing setup request message is used to report the CSG ID of the access NE. On different types of networks, the setup request messages are different. For example, on an evolved UMTS terrestrial radio access network (E-UTRAN), the access NE sends an S1 setup request message to the management NE (for example MME), where the setup request message includes a tracking area (TA) ID supported by the access NE and the CSG ID supported by the access NE; on a UTRAN, the access NE sends an Iu setup request message to the management NE (for example, SGSN), where the Iu setup request message includes a routing area (RA) ID supported by the access NE and the CSG ID supported by the access NE.

Method 2: A special message is used to report the CSG ID to the management NE.

According to Embodiment 2 of the present disclosure, the access NE sends a CSG notify request message to report the CSG ID to the management NE.

Step 32: The management NE sends a response message to the access NE.

According to different methods for reporting the CSG ID, the response message sent by the management NE to the access NE is a setup response message (response to an Iu interface setup request or S1 interface setup request) or a CSG notify response message.

Step 33: The management NE obtains the access NE to be paged according to the CSG ID. This step includes at least the following two processing methods:

### PROCESSING METHOD 1:

Step 3311: The management NE obtains a CSG ID to be paged. The management NE first obtains, through at least one of an allowed CSG list of the UE and a mobility list, the CSG ID to be paged.

The CSG ID to be paged can be obtained in at least the following two ways:
The first way is taking the CSG ID in the allowed CSG list of the UE as the CSG ID to be paged.

The subscription data of the allowed CSG list information of the UE is stored in the home subscriber server (HSS). The management NE obtains the allowed CSG list from the HSS. The area identified by the CSG ID in the CSG list is the area that may be used by the UE to be paged. The CSG ID is taken as the CSG ID to be paged.

The second way is determining whether the location area ID corresponding to the CSG ID in the allowed CSG list of the UE is in a mobility list of the UE. If the location area ID is in the mobility list, take the CSG ID as the CSG ID to be paged. The management NE may obtain the CSG ID to be paged in the following manners:
1) The management NE obtains the location area ID corresponding to the CSG ID according to the location area ID and CSG ID reported by the access NE. For each CSG ID in the allowed CSG list of the UE, the management NE queries the location area ID corresponding to the CSG ID and determines whether the location area ID is in the mobility list of the UE. If the location area ID is in the mobility list of the UE, the management NE takes the CSG ID as the CSG ID to be paged.
2) The management NE obtains the CSG ID used by the location area ID according to the location area ID and CSG ID reported by the access NE. The management NE queries each location area ID in the mobility list of the UE, and determines whether each CSG ID used by the location area ID is in the allowed CSG list of the UE; if the CSG ID is in the allowed CSG list of the UE, the management NE takes it as the CSG ID to be paged.

In the preceding second way, both the allowed CSG list of the UE and the mobility list of the UE are used. Only when the location area ID corresponding to the CSG ID in the allowed CSG list of the UE is in the mobility list of the UE, this CSG ID is taken as the CSG ID to be paged. The second way of determining the CSG ID to be paged further reduces the scope of sending the paging message and reduces the unnecessary paging messages effectively.

Step 3312: When the CSG ID from the access NE corresponds to the CSG ID to be paged, the management NE takes the access NE as the access NE to be paged.

The management NE may perform the following operations:
1) The management NE queries, according to the CSG ID to be paged, whether the CSG ID in the access NE supported by the management NE is consistent with the CSG ID to be paged. If they are consistent, the management NE sends a paging message to the access NE.
2) The management NE generates a CSG ID data table beforehand according to the CSG ID reported by the access NE. The data table includes the CSG ID and the information about the access NE corresponding to the CSG ID. The management NE queries the CSG ID data table to obtain the information about the access NE corresponding to the CSG ID according to the CSG ID to be paged. The management NE sends a paging message to the access NE.

### PROCESSING METHOD 2:

When the CSG ID from the access NE corresponds to the CSG ID in the allowed CSG ID list of the UE, the management NE takes the access NE as the access NE to be paged.

In processing method 2, the CSG ID to be paged does not need to be obtained beforehand according to the CSG ID reported by the access NE and the location area ID, and in addition the access NE to which a paging message is sent does not need to be searched out. For each access NE, the management NE queries immediately whether the CSG ID is in the allowed CSG list of the UE according to the CSG ID reported by the access NE when the paging message is sent by the management NE. If it is in the allowed CSG list, the management NE sends a paging message to the access NE.

Embodiment 2 of the present disclosure also includes: After confirming that the CSG ID is in the allowed CSG list of the UE, the management NE queries whether the location area ID corresponding to the CSG ID is in the mobility list of the UE. If it is in the mobility list, the management NE sends a paging message to the corresponding access NE.

Step 34: The management NE sends a paging message to the access NE to be paged.

The management NE sends a paging message to the access NE to be paged, and then the access NE sends the paging message (for example, broadcasting the paging message through the air interface).

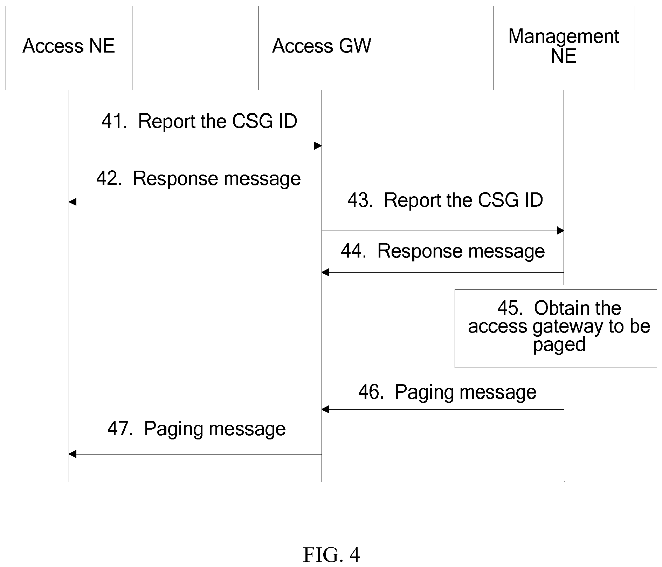

In another paging method, an access NE and a management NE are connected through an access GW, as shown in FIG. 4.

Step 41: The access NE reports a CSG ID to the access GW.

The access NE reports the CSG ID to the access GW with the above method 1 and method 2. Meanwhile, the access NE also reports the location area ID of the access NE, which is not described here.

Step 42: The access GW sends a response message to the access NE.

The response message sent from the access GW to the access NE is a setup response message or a CSG notify response message (refer to the description of step 32) according to the different report methods. The CSG ID and the location area ID of the access NE are stored in the access GW.

Step 43: The access GW reports the CSG ID supported by the access GW to the management NE.

The access GW may also report the CSG ID supported by the access GW to the management NE with the above method 1 and method 2. Meanwhile, the access GW also reports the location area ID supported by the access GW to the management NE. The location area ID supported by the access GW is the location area ID supported by the access NE that is managed by the access GW. The CSG ID supported by the access GW is the CSG ID supported by the access NE that is managed by the access GW.

Step 44: The management NE sends a response message to the access GW.

The response message sent from the management NE to the access GW is a setup response message or a CSG notify response message according to the different report methods.

Step 45: The management NE obtains the access GW to be paged.

In step 45, the method of obtaining the access GW to be paged can be referred to step 33.

Step 46: The management NE sends a paging message to the access GW.

The management NE sends a paging message to the access GW corresponding to the CSG ID to be paged. The paging message includes the CSG ID to be paged.

Step 47: The access GW sends a paging message to the access NE.

The access GW queries the access NE corresponding to the CSG ID according to the CSG ID included in the paging message, and sends the paging message to the access NE, and then the access NE sends the paging message (for example, broadcast the paging message through the air interface). The access GW may perform the following operations:
(1) The access GW queries, according to the CSG ID included in the paging message, whether the CSG ID of its supported access NE is consistent with the CSG ID included in the paging message. If they are consistent, the access GW sends the paging message to the access NE.
2) The access GW generates a CSG ID data table according to the CSG ID reported by the access NE. The data table includes the CSG ID and the information about the access NE corresponding to the CSG ID. The access GW queries the CSG ID data table according to the CSG ID included in the paging message, and obtains the information about the access NE corresponding to the CSG ID. The access GW sends a paging message to the access NE.

With the technical solution provided by Embodiment 2 of the present disclosure, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

Embodiment 3 of the present disclosure provides a paging method. The method includes:
receiving, by a management NE, a CSG indication information from an access NE or an access GW;
sending, by the management NE, a paging message to the access NE or the access GW supporting the CSG function according to the CSG indication information, where the paging message includes an allowed CSG list of a UE.

The above indication information indicates whether the access NE or the access GW supports the CSG function (in some embodiments, also uses mechanism to instead function, hereinafter using function for unification). That is, the access NE or the access GW allows the access of only a group of UEs, and other UEs not in this group are not allowed to access.

With the technical solution provided by Embodiment 3 of the present disclosure, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

Embodiment 4 of the present disclosure provides a paging method, which includes as follows:
receiving, by an access network element (NE) or an access GW, a paging message from a management NE, the paging message including an allowed closed subscriber group (CSG) of a user equipment (UE);
determining, by the access NE or the access GW, whether the supported CSG ID is in the allowed CSG list; if it is in the allowed CSG list, sending, by the access NE or the access GW, the paging message.

With the technical solution provided by Embodiment 4 of the present disclosure, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

The following section describes the paging method provided in Embodiment 5. Embodiment 5 provides at least two paging methods, which are different from each other in that the connection modes of the involved network entities in the paging process are different.

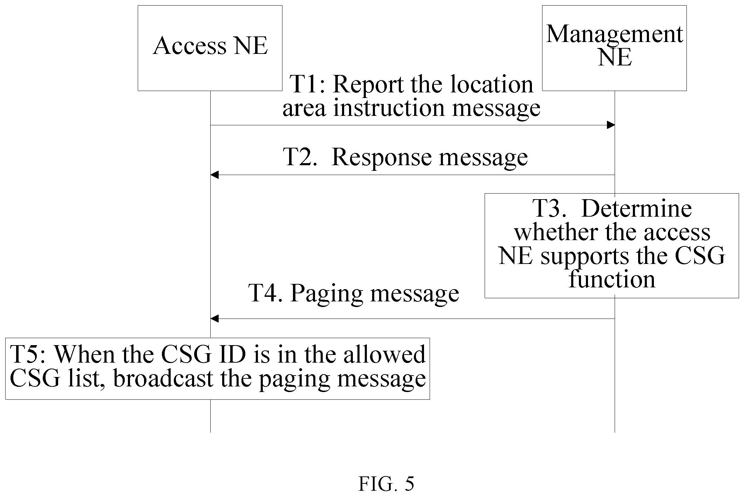

In one paging method, an access NE and an management NE are directly connected, as shown in FIG. 5.

Step T1: The access gateway reports a CSG indication information to the management NE.

The access NE reports CSG indication information to the management NE, and the CSG indication information instructs whether the access NE supports the CSG function or not. Because both the access NE using the CSG function and the access NE without using the CSG function exist on the network, the management NE acquires whether the access NE supports CSG function or not according to the CSG indication information.

The CSG indication information is reported through a setup request message. For example, for the E-UTRAN, the access NE sends an S1 interface setup request message to the management NE (for example, MME), and the information includes the TA and CSG indication information supported by the access NE; for the UTRAN, the access NE sends an Iu interface setup request message to the management NE, (for example, SGSN) where the message includes the RA and the CSG indication information supported by the access NE. The CSG indication information included by the setup request information can be processed as follows:
1) The setup request message includes CSG indicator information element (IE), the IE represents that the access NE supports CSG function. If there is not such IE in the setup request message, it means the access NE does not support CSG function.
2) Including CSG Type IE in the setup request message. The CSG Type IE has two values:
   0: Indicates that the CSG function is not supported.
   1: Indicates that the CSG function is supported.

If the access NE supports CSG function, set the value of the IE with 1; if not, set the value of the IE with 0.

Step T2: The management NE sends a response message to the access NE.

The response message is a setup response message.

Step T3: The management NE determines whether the access NE supports the CSG function according to the CSG indication information.

Step T4: When the access NE supports the CSG function, the access NE sends a paging message to the access NE, the message including an allowed CSG list of the UE.

The paging message sent to the access NE which does not support the CSG function does not include the allowed CSG list of the UEs.

Step T5: The access NE receives the paging message from the management NE and determines whether the CSG ID supported by the access NE is in the allowed CSG list, if the CSG ID is in the allowed CSG list, the access NE sends the paging message.

In the embodiments of the present disclosure, the CSG ID in the allowed CSG list of the UE is taken as the CSG ID to be paged. To be specific, the access NE determines whether its supported CSG ID corresponds to the CSG ID in the allowed CSG list. This narrows down the area where the paging message is sent and therefore reduces the number of paging messages.

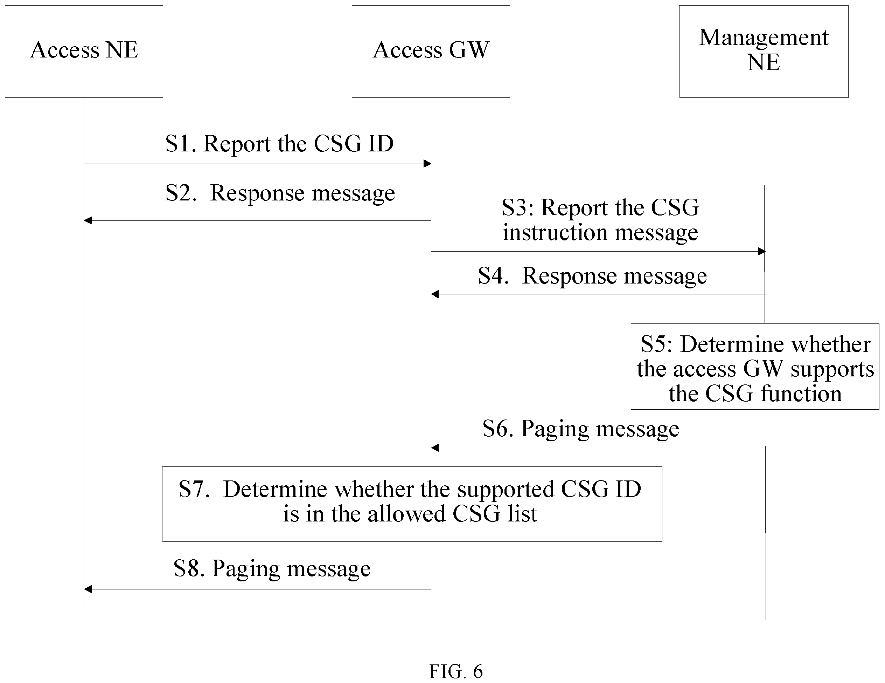

In another paging method, an access NE and a management NE are connected through an access GW, as shown in FIG. 6.

Step S1: The access NE reports its used location area ID and CSG ID to the access GW.

The methods of reporting the location area ID and CSG ID used by the access NE can be referred to in method 1 and method 2 in step 21.

Step S2: The access GW sends a response message to the access NE.

According to different reporting methods, the sent response message is a setup response message or a CSG notify response message, and the access GW stores the CSG ID and location area ID.

Step S3: The access GW reports the CSG indication information to the management NE. The access GW reports the CSG indication information through a setup request message. For example, for an E-UTRAN, the access GW sends an S1 setup request message to the management NE (MME), where the message includes a TA and a CSG indication information supported by the access NE; for a UTRAN, the access GW sends an Iu setup request message to the management NE, where the message includes an RA and a CSG indication information supported by the access GW. The CSG indication information may be processed as follows:
1) A CSG indicator IE is included in the setup request message, where the IE represents the CSG function supported by the access GW. If the setup request message does not include this IE, it indicates that the access GW does not support the CSG function.
2) A CSG Type IE is included in the setup request message. The CSG Type IE has two values:
   0:0: Indicates that the CSG function is not supported.
   1: Indicates that the CSG function is supported.

If the access GW supports the CSG function, the value of the IE is set to 1; otherwise, the value of the IE is set to 0.

Step S4: The management NE sends a response message to the access GW.

Step S5: The management NE determines whether the access GW supports the CSG function according to the CSG indication information.

Step S6: When the access GW supports the CSG function, a paging message including the allowed CSG list of the UE is sent to the access GW. When the access GW does not support the CSG function, the paging message not including the allowed CSG list of the UE is sent to the access GW.

Step S7: The access GW receives a paging message from the management NE and determines whether the CSG ID supported by the access GW is in the allowed CSG list.

Step S8: When the CSG ID supported by the access GW is in the allowed CSG list, the access GW sends a paging message to the management NE corresponding to the CSG ID.

With the technical solution provided by Embodiment 5 of the present disclosure, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

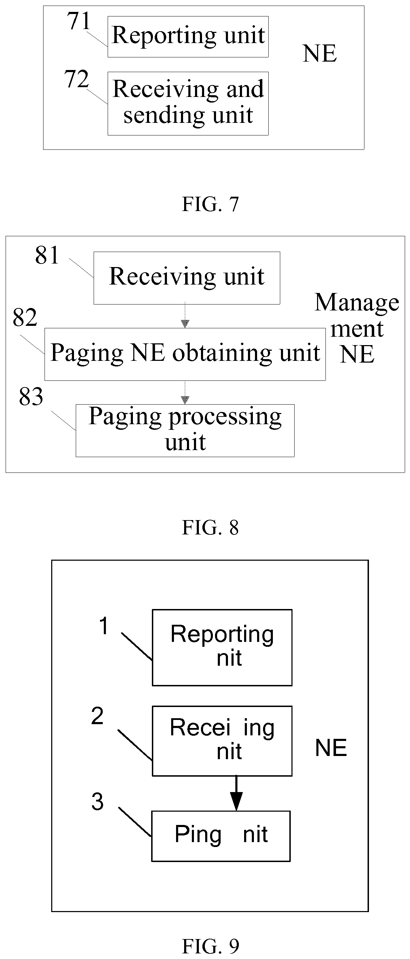

Embodiment 1 of the present disclosure also provides an NE. As shown in FIG. 7, the NE includes as follows:
a reporting unit 71, configured to report a CSG ID supported the NE; and
a receiving and sending unit 72, configured to receive a paging message and send the paging message.

The above NE can be implemented through the access NE and the access GW. When the access GW is used, the management NE sends a paging message including the CSG ID to be paged to the access GW. The NE further includes: an obtaining unit, configured to obtain the corresponding access NE according to the CSG ID in the paging message received by the receiving and sending unit 72, and trigger the receiving and sending unit 72 to send a paging message to the access NE.

The specific working mode of each function entity in the above NE can be referred to in the method embodiments of the present disclosure.

Embodiment 1 of the present disclosure provides a management NE. As shown in FIG. 8, the management NE includes:
a receiving unit 81, configured to receive a CSG ID supported by an access NE or an access GW from the access NE or the access GW;
a paging NE obtaining unit 82, configured to obtain the access NE or the access GW to be paged according to the CSG ID received by the receiving unit 81; and
a paging processing unit 83, configured to send a paging message to the access NE or the access GW obtained by the paging NE obtaining unit 82.

Further, the paging NE obtaining unit 82 is further configured to obtain the CSG ID to be paged; and to take the access NE or the access GW as the access NE or the access GW to be paged if the CSG ID of the access NE or the access GW corresponds to the CSG ID to be paged;
or,
the paging NE obtaining unit 82 is further configured to take the access NE or the access GW as the access NE or access GW to be paged if the CSG ID supported by the access NE or access GW corresponds to the CSG ID in the allowed CSG list of a UE.

The specific working mode of each function entity in the above management NE can be referred to in the method embodiments of the present disclosure.

With the technical solution provided by embodiments of the present disclosure, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

Embodiment 2 of the present disclosure provides an NE. As shown in FIG. 9, the NE includes:
a reporting unit 91, configured to report a CSG indication information of the NE;
a receiving unit 92, configured to receive a paging message from a management NE, where the paging message includes an allowed CSG list of a UE; and
a paging processing unit 93, configured to determine whether the CSG ID supported by the NE is in the allowed CSG list; and to send the paging message if the CSG ID is in the allowed CSG list.

The specific working mode of each function entity in the above NE is referred to in the embodiment of the present disclosure.

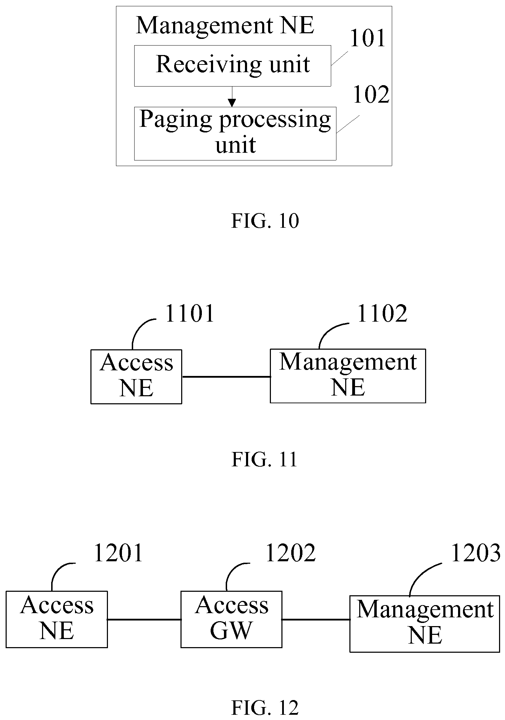

Embodiment 2 of the present disclosure also provides a management NE. As shown in FIG. 10, the management NE includes:
a receiving unit 101, configured to receive a CSG indication information from an access NE or an access GW; and
a paging processing unit 102, configured to send a paging message to the access NE or the access GW supporting the CSG function according to the CSG indication information, where the paging message includes an allowed CSG list of a UE.

The specific working mode of each function entity in the above management NE can be referred to the method embodiments of the present disclosure.

With the technical solution provided by embodiments of the present disclosure, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

Embodiment 1 of the present disclosure provides a communication system. As shown in FIG. 11, the communication system includes an access NE 1101 and a management NE 1102.

The access NE 1101 is configured to report a CSG ID supported by the access NE 1101 to the management NE 1102, receive a paging message from the management NE 1102, and send the paging message; or
the access NE 1101 is configured to report a CSG indication information to the management NE 1101 to the management NE 1102, receive an allowed CSG list of a UE from the management NE 1102, and determine whether the supported CSG ID is in the allowed CSG list; if the CSG ID is in the allowed CSG list, send a paging message.

The management NE 1102 is configured to receive the CSG ID supported by the access NE 1101, and send the paging message to the corresponding access NE 1101 when the CSG ID corresponds to the CSG ID to be paged or corresponds to the CSG ID in the allowed CSG list of the UE; or
the management NE 1102 is configured to receive the CSG indication information, and send the paging message to the access NE 1101 supporting the CSG function, where the paging message includes the allowed CSG list of the UE.

Embodiment 2 of the present disclosure provides a communication system. As shown in FIG. 12, the communication system includes an access NE 1201, an access GW 1202, and a management NE 1203. The access NE 1201 is configured to report a CSG ID supported by the access NE 1201 to the access GW 1202, receive a paging message from the access GW, and send the paging message.

The access GW 1202 is configured to report the CSG ID of the GW 1202 to the management NE 1203, receive the paging message from the management NE 1203, and send the paging message to the access NE 1201 using the CSG ID included in the paging message; or
the access GW 1202 is configured to report a CSG indication information of the access GW 1202 to the management NE 1203, receive an allowed CSG list of a UE from the management NE 1203, and determine whether the ID of the supported CSG is in the allowed CSG list; if the CSG ID is in the allowed CSG list, send a paging message to the access NE 1202 corresponding to the CSG ID.

The management NE 1203 is configured to receive the CSG ID message reported by the access GW 1202, and determine whether the CSG ID corresponds to the CSG ID to be paged; if CSG ID corresponds to the CSG ID to be paged, send a paging message to the access GW 1202; or
the management NE 1203 is configured to receive the CSG indication information reported by the access GW 1202, and send the paging message to the access GW 1202 supporting the CSG function according to the CSG indication information, where the paging message includes the allowed CSG list of the UE.

With the communication system provided by embodiments of the present disclosure, the paging message is sent in certain areas that may be used by a UE through the allowed CSG list of the UE to be paged. This solves the prior-art problem where the resources are wasted because the paging message needs to be sent in all the CSG areas of all the location areas in the mobility list. Therefore, the paging messages and the system resource consumption are reduced effectively.

The common technical engineer in this field can understand the whole or partial procedure in the above embodiments. The procedure can be implemented through the relevant hardware of the program command. The corresponding software of the embodiments can be stored in a computer media which can be stored and read.

In conclusion, the above are merely exemplary embodiments of the present disclosure. The scope of the present disclosure is not limited thereto. Variations or replacements readily apparent to persons skilled in the prior art within the technical scope of the present disclosure should fall within the scope of the present disclosure. Therefore, the protection scope of the present disclosure is defined by the appended claims.

## Claims

1. A paging method, comprising:
receiving (31 or 43), by a management network element, NE, a closed subscriber group, CSG, identifier, ID, supported by an access network element, NE, sent from the access NE, or a CSG ID supported by an access gateway, GW, sent from the access GW;
obtaining (33 or 45), by the management NE, an access NE to be paged according to the CSG ID supported by the access NE, or an access GW to be paged according to the CSG ID supported by the access GW; and
sending (34 or 46), by the management NE, a paging message to the obtained access NE or to the obtained access GW to be paged;
wherein the obtaining (33) an access NE to be paged according to the CSG ID supported by the access NE comprises:
obtaining (3311) a CSG ID to be paged, wherein the obtaining (3311) of the CSG ID to be paged comprises:
determining whether a location area ID corresponding to the CSG ID in an allowed CSG list of the UE is in a mobility list of the UE; if the location ID is in the mobility list, taking the CSG ID as the CSG ID to be paged;
wherein if (3312) the CSG ID supported by the access NE corresponds to the CSG ID to be paged, the access NE is the access NE to be paged, the method further including: generating a CSG ID data table, by the management NE, according to the CSG ID supported by the access NE, the table including the CSG ID and information about the access NE corresponding to the CSG ID; and obtaining the access NE to be paged by querying the data table according to the CSG ID to be paged;
wherein the obtaining (45) an access GW to be paged according to the CSG ID supported by the access GW comprises:
obtaining a CSG ID to be paged, wherein the obtaining of the CSG ID to be paged comprises:
determining whether a location area ID corresponding to the CSG ID in an allowed CSG list of the UE is in a mobility list of the UE; if the location ID is in the mobility list, taking the CSG ID as the CSG ID to be paged;
wherein if the CSG ID supported by the access GW corresponds to the CSG ID to be paged, the access GW is the access GW to be paged; the method further including: generating, by the access GW, a CSG ID data table according to CSG IDs reported by each access NE connected to the access GW, the table including the reported CSG IDs and information about the access NEs corresponding to each CSG ID; obtaining, by the access GW, an access NE to be paged by querying the data table according to the CSG ID included in the paging message, and sending, by the access GW, the paging message to the access NE.

2. The method according to claim 1, wherein receiving, a CSG ID supported by an access NE sent from the access NE, comprises:
receiving a setup request message including the CSG ID sent from the access NE; or
receiving a notify request message including the CSG ID sent from the access NE.

3. The method according to claim 1, wherein receiving, a CSG ID supported by an access GW sent from the access GW, comprises:
receiving a setup request message including the CSG ID sent from the access GW; or
receiving a notify request message including the CSG ID sent from the access GW.

4. The method according to any one of claims 1 and 2 wherein the access NE includes at least one of a home NodeB, a home evolved NodeB, a home non-3GPP wireless access point, a NodeB supporting the CSG function, an evolved NodeB, and a non-3GPP wireless access point.

5. A management network element, NE, comprising:
a receiving unit (81), configured to receive a closed subscriber group, CSG, ID supported by an access NE sent from the access NE, or receive a CSG ID supported by an access gateway, GW, sent from the access GW ;
a paging NE obtaining unit (82), configured to obtain an access NE to be paged according to the CSG ID supported by the access NE, or obtain an access GW to be paged according to the CSG ID supported by the access GW; and
a paging unit (83), configured to send a paging message to the obtained access NE or the obtained access GW to be paged;
wherein the paging NE obtaining unit is further configured to obtain a CSG ID to be paged, the paging NE obtaining unit (82) is configured to determine whether a location area ID corresponding to the CSG ID in an allowed CSG list of the UE is in a mobility list of the UE; if the location ID is in the mobility list, the paging NE obtaining unit (82) is configured to take the CSG ID as the CSG ID to be paged; and if the CSG ID supported by the access NE or the access GW corresponds to the CSG ID to be paged, the management NE is configured to take the access NE or the access GW as the access NE or the access GW to be paged;
wherein the management NE is further configured to: generate a CSG ID data table according to the CSG ID reported by the access NE, the table including the CSG ID and information about the access NE corresponding to the CSG ID; and obtain the information about the access NE corresponding to CSG ID by querying the data table according to the CSG ID to be paged.

6. A communication system, comprising:
an access network element, NE (1101), configured to report a closed subscriber group, CSG, ID supported by the access NE (1101) to a management NE (1102); receive a paging message from the management NE(1102), and send the paging message;
the management NE (1102) is configured to receive the CSG ID supported by the access NE (1101), obtain an access NE to be paged according to the CSG ID supported by the access NE (1101); and send a paging message to the obtained access NE to be paged;
wherein the management NE (1102) obtaining the access NE to be paged according to the CSG ID supported by the access NE (1101) is configured to: obtain a CSG ID to be paged, and determine whether a location area ID corresponding to the CSG ID in an allowed CSG list of the UE is in a mobility list of the UE; if the location ID is in the mobility list, the management NE (1101) is configured to take the CSG ID as the CSG ID to be paged; wherein if the CSG ID supported by the access NE corresponds to the CSG ID to be paged, the access NE is the access NE to be paged;
wherein the management NE (1102) is further configured to: generate a CSG ID data table according to the CSG ID reported by the access NE, the table including the CSG ID and information about the access NE corresponding to the CSG ID; and obtain the access NE to be paged by querying the data table according to the CSG ID to be paged.

7. The system according to claim 6, wherein the access NE includes at least one of a home NodeB, a home evolved NodeB, a home non-3GPP wireless access point, a NodeB supporting the CSG function, an evolved NodeB, and a non-3GPP wireless access point.

## Patentansprüche

1. Rufverfahren, umfassend:
Empfangen (31 oder 43) einer durch ein Zugangs-Netzelement bzw. -NE unterstützten Kennung ID einer geschlossenen Teilnehmergruppe CSG, die von dem Zugangs-NE gesendet wird, oder einer durch ein Zugangs-Gateway bzw. -GW unterstützten CSG-ID, die von dem Zugangs-GW gesendet wird, durch ein Verwaltungs-Netzelement bzw. -NE;
Erhalten (33 oder 45) eines zu rufenden Zugangs-NE gemäß der durch das Zugangs-NE unterstützten CSG-ID oder eines zu rufenden Zugangs-GW gemäß der durch das Zugangs-GW unterstützten CSG-ID durch das Verwaltungs-NE; und
Senden (34 oder 46) einer Ruf-Nachricht zu dem erhaltenen Zugangs-NE oder zu dem erhaltenen Zugangs-GW, das zu rufen ist, durch das Verwaltungs-NE;
wobei das Erhalten (33) eines zu rufenden Zugangs-NE gemäß der durch das Zugangs-NE unterstützten CSG-ID Folgendes umfasst:
Erhalten (3311) einer zu rufenden CSG-ID, wobei das Erhalten (3311) der zu rufenden CSG-ID Folgendes umfasst:
Bestimmen, ob eine der CSG-ID entsprechende Aufenthaltsbereichs-ID in einer erlaubten CSG-Liste des UE in einer Mobilitätsliste des UE steht; wenn die Aufenthalts-ID in der Mobilitätsliste steht, Nehmen der CSG-ID als die zu rufende CSG-ID;
wobei, wenn (3312) die durch das Zugangs-NE unterstützte CSG-ID der zu rufenden CSG-ID entspricht, das Zugangs-NE das zu rufende Zugangs-NE ist, wobei das Verfahren ferner Folgendes umfasst: Erzeugen einer CSG-ID-Datentabelle durch das Verwaltungs-NE gemäß der durch das Zugangs-NE unterstützten CSG-ID, wobei die Tabelle die CSG-ID und Informationen über das der CSG-ID entsprechende Zugangs-NE umfasst; und Erhalten des zu rufenden Zugangs-NE durch Abfragen der Datentabelle gemäß der zu rufenden CSG-ID;
wobei das Erhalten (45) eines zu rufenden Zugangs-GW gemäß der durch das Zugangs-GW unterstützten CSG-ID Folgendes umfasst:
Erhalten einer zu rufenden CSG-ID, wobei das Erhalten der zu rufenden CSG-ID Folgendes umfasst:
Bestimmen, ob eine der CSG-ID entsprechende Aufenthaltsbereichs-ID in einer erlaubten CSG-Liste des UE in einer Mobilitätsliste des UE steht; wenn die Aufenthalts-ID in der Mobilitätsliste steht, Nehmen der CSG-ID als die zu rufende CSG-ID;
wobei, wenn die durch das Zugangs-GW unterstützte GW-ID der zu rufenden CSG-ID entspricht, das Zugangs-GW das zu rufende Zugangs-GW ist; wobei das Verfahren ferner Folgendes umfasst: Erzeugen einer CSG-ID-Datentabelle durch das Zugangs-GW gemäß CSG-IDs, die durch jedes mit dem Zugangs-GW verbundene Zugangs-NE gemeldet werden, wobei die Tabelle die gemeldeten CSG-IDs und Informationen über die jeder CSG-ID entsprechenden Zugangs-NEs umfasst; Erhalten eines zu rufenden Zugangs-NE durch das Zugangs-GW durch Abfragen der Datentabelle gemäß der in der Ruf-Nachricht enthaltenen CSG-ID und Senden der Ruf-Nachricht zu dem Zugangs-NE durch das Zugangs-GW.

2. Verfahren nach Anspruch 1, wobei Empfangen einer durch ein Zugangs-NE unterstützten CSG-ID, die von dem Zugangs-NE gesendet wird, Folgendes umfasst:
Empfangen einer Aufbauanforderungsnachricht, die die von dem Zugangs-NE gesendete CSG-ID umfasst; oder
Empfangen einer die von dem Zugangs-NE gesendete CSG-ID enthaltenden Benachrichtigungsanforderungsnachricht.

3. Verfahren nach Anspruch 1, wobei Empfangen einer durch ein Zugangs-GW unterstützten CSG-ID, die von dem Zugangs-GW gesendet wird, Folgendes umfasst:
Empfangen einer Aufbauanforderungsnachricht, die die von dem Zugangs-GW gesendete CSG-ID umfasst; oder
Empfangen einer Benachrichtigungsanforderungsnachricht, die die von dem Zugangs-GW gesendete CSG-ID umfasst.

4. Verfahren nach einem der Ansprüche 1 und 2, wobei das Zugangs-NE einen Heimat-NodeB, einen Heimat-Evolved-NodeB, einen drahtlosen Heimat-Nicht-3GPP-Zugangspunkt, einen die CSG-Funktion unterstützenden NodeB, einen Evolved-NodeB und/oder einen drahtlosen Nicht-3GPP-Zugangspunkt umfasst.

5. Verwaltungs-Netzelement bzw. -NE, umfassend:
eine Empfangseinheit (81), ausgelegt zum Empfangen einer durch ein Zugangs-NE unterstützten ID einer geschlossenen Teilnehmergruppe CSG, die von dem Zugangs-NE gesendet wird, oder Empfangen einer durch ein Zugangs-Gateway bzw. -GW unterstützten CSG-ID, die von dem Zugangs-GW gesendet wird;
eine Ruf-NE-Erhalteeinheit (82), ausgelegt zum Erhalten eines zu rufenden Zugangs-NE gemäß der durch das Zugangs-NE unterstützten CSG-ID oder Erhalten eines zu rufenden Zugangs-GW gemäß der durch das Zugangs-GW unterstützten; und
eine Ruf-Einheit (83), ausgelegt zum Senden einer Ruf-Nachricht zu dem erhaltenen Zugangs-NE oder zu dem erhaltenen Zugangs-GW, das zu rufen ist;
wobei die Ruf-NE-Erhalteeinheit ferner ausgelegt ist zum Erhalten einer zu rufenden CSG-ID, wobei die Ruf-NE-Erhalteeinheit (82) ausgelegt ist zum Bestimmen, ob eine der CSG-ID entsprechende Aufenthaltsbereichs-ID in einer erlaubten CSG-Liste des UE in einer Mobilitätsliste des UE steht; wenn die Aufenthalts-ID in der Mobilitätsliste steht, die Ruf-NE-Erhalteeinheit (82) ausgelegt ist zum Nehmen der CSG-ID als die zu rufende CSG-ID; und wenn die durch das Zugangs-NE oder das Zugangs-GW unterstützte CSG-ID der zu rufenden CSG-ID entspricht, das Verwaltungs-NE ausgelegt ist zum Nehmen des Zugangs-NE oder des Zugangs-GW als das zu rufende Zugangs-NE oder Zugangs-GW;
wobei das Verwaltungs-NE ferner ausgelegt ist zum Erzeugen einer CSG-ID-Datentabelle gemäß der durch das Zugangs-NE gemeldeten CSG-ID, wobei die Tabelle die CSG-ID und Informationen über das der CSG-ID entsprechende Zugangs-NE umfasst; und Erhalten der Informationen über das der CSG-ID entsprechende Zugangs-NE durch Abfragen der Datentabelle gemäß der zu rufenden CSG-ID.

6. Kommunikationssystem, umfassend:
ein Zugangs-Netzelement bzw. -NE (1101), ausgelegt zum Melden einer durch das Zugangs-NE (1101) unterstützten ID einer geschlossenen Teilnehmergruppe CSG an ein Verwaltungs-NE (1102); Empfangen einer Ruf-Nachricht von dem Verwaltungs-NE (1102) und Senden der Ruf-Nachricht;
wobei das Verwaltungs-NE (1102) ausgelegt ist zum Empfangen der durch das Zugangs-NE (1101) unterstützten CSG-ID, Erhalten eines zu rufenden Zugangs-NE gemäß der durch das Zugangs-NE (1101) unterstützten CSG-ID; und Senden einer Ruf-Nachricht zu dem erhaltenen zu rufenden Zugangs-NE;
wobei das Verwaltungs-NE (1102), das das zu rufende Zugangs-NE gemäß der durch das Zugangs-NE (1101) unterstützten CSG-ID erhält, ausgelegt ist zum Erhalten einer zu rufenden CSG-ID und Bestimmen, ob eine der CSG-ID entsprechende Aufenthaltsbereichs-ID in einer erlaubten CSG-Liste des UE in einer Mobilitätsliste des UE steht; wenn die Aufenthalts-ID in der Mobilitätsliste steht, das Verwaltungs-NE (1101) ausgelegt ist zum Nehmen der CSG-ID als die zu rufende CSG-ID;
wobei, wenn die durch das Zugangs-NE unterstützte CSG-ID der zu rufenden CSG-ID entspricht, das Zugangs-NE das zu rufende Zugangs-NE ist;
wobei das Verwaltungs-NE (1102) ferner ausgelegt ist zum Erzeugen einer CSG-ID-Datentabelle gemäß der durch das Zugangs-NE gemeldeten CSG-ID, wobei die Tabelle die CSG-ID und Informationen über das der CSG-ID entsprechende Zugangs-NE umfasst; und Erhalten des zu rufenden Zugangs-NE durch Abfragen der Datentabelle gemäß der zu rufenden CSG-ID.

7. System nach Anspruch 6, wobei das Zugangs-NE einen Heimat-NodeB, einen Heimat-Evolved-NodeB, einen drahtlosen Heimat-Nicht-3GPP-Zugangspunkt, einen die CSG-Funktion unterstützenden NodeB, einen Evolved-NodeB und/oder einen drahtlosen Nicht-3GPP-Zugangspunkt umfasst.

## Revendications

1. Procédé de radiomessagerie, comprenant les étapes suivantes :
recevoir (31 ou 43), par un élément de réseau NE de gestion, un identifiant ID de groupe fermé d'abonnés CSG, pris en charge par un élément de réseau NE d'accès, envoyé à partir du NE d'accès, ou un CSG ID pris en charge par une passerelle GW d'accès, envoyé à partir du GW d'accès ;
obtenir (33 ou 45), par le NE de gestion, un NE d'accès à téléavertir selon le CSG ID pris en charge par le GW d'accès ; et
envoyer (34 ou 46), par le NE de gestion, un message de radiomessagerie au NE d'accès obtenu ou au GW d'accès obtenu à téléavertir ;
l'étape d'obtention (33) d'un NE d'accès à téléavertir selon le CSG ID pris en charge par le NE d'accès comprenant :
obtenir (3311) un CSG ID à téléavertir, l'étape d'obtention (3311) du CSG ID à téléavertir comprenant :
déterminer si un ID de zone d'emplacement correspondant au CSG ID dans une liste de CSG autorisés de l'UE est dans une liste de mobilité de l'UE ; si l'ID d'emplacement est dans la liste de mobilité, prendre le CSG ID comme le CSG ID à téléavertir ;
si (3312) le CSG ID pris en charge par le NE d'accès correspond au CSG ID à téléavertir, le NE d'accès étant le NE d'accès à téléavertir, le procédé comprenant en outre : générer une table de données de CSG ID, par le NE de gestion, selon le CSG ID pris en charge par le NE d'accès, la table comportant le CSG ID et des informations concernant le NE d'accès correspondant au CSG ID ; et obtenir le NE d'accès à téléavertir en consultant la table de données selon le CSG ID à téléavertir ;
l'étape d'obtention (45) d'un GW d'accès à téléavertir selon le CSG ID pris en charge par le GW d'accès comprenant :
obtenir un CSG ID à téléavertir, l'étape d'obtention du CSG ID à téléavertir comprenant :
déterminer si un ID de zone d'emplacement correspondant au CSG ID dans une liste de CSG autorisés de l'UE est dans une liste de mobilité de l'UE ; si l'ID d'emplacement est dans la liste de mobilité, prendre le CSG ID comme le CSG ID à téléavertir ;
si le CSG ID pris en charge par le GW d'accès correspond au CSG ID à téléavertir, le GW d'accès étant le GW d'accès à téléavertir ; le procédé comprenant en outre : générer par le GW d'accès, une table de données de CSG ID selon des CSG ID rapportés par chaque NE d'accès connecté au GW d'accès, la table comportant les CSG ID rapportés et des informations concernant les NE d'accès correspondant à chaque CSG ID ; obtenir, par le GW d'accès, un NE d'accès à téléavertir en consultant la table de données selon le CSG ID inclus dans le message de radiomessagerie et envoyer, par le GW d'accès, le message de radiomessagerie au NE d'accès.

2. Procédé selon la revendication 1, dans lequel l'étape de réception d'un CSG ID pris en charge par un NE d'accès envoyé à partir du NE d'accès comprend :
recevoir un message de requête de configuration comportant le CSG ID envoyé à partir du NE d'accès ; ou
recevoir un message de requête de notification comportant le CSG ID envoyé à partir du NE d'accès.

3. Procédé selon la revendication 1, dans lequel l'étape de réception d'un CSG ID pris en charge par un GW d'accès envoyé à partir du GW d'accès comprend :
recevoir un message de requête de configuration comportant le CSG ID envoyé à partir du GW d'accès ; ou
recevoir un message de requête de notification comportant le CSG ID envoyé à partir du GW d'accès.

4. Procédé selon l'une quelconque des revendications 1 et 2, dans lequel le NE d'accès comprend au moins un élément parmi un nœudB local, un nœudB évolué local, un point d'accès sans fil non 3GPP local, un nœudB prenant en charge la fonction CSG, un nœudB évolué, et un point d'accès sans fil non 3GPP.

5. Elément de réseau NE de gestion, comprenant :
une unité de réception (81), configurée pour recevoir un ID de groupe fermé d'abonnés CSG, pris en charge par un NE d'accès envoyé à partir du NE d'accès, ou recevoir un CSG ID pris en charge par une passerelle GW d'accès, envoyé à partir du GW d'accès ;
une unité d'obtention de NE de radiomessagerie (82), configurée pour obtenir un NE d'accès à téléavertir selon le CSG ID pris en charge par le NE d'accès, ou obtenir un GW d'accès à téléavertir selon le CSG ID pris en charge par le GW d'accès ; et
une unité de radiomessagerie (83), configurée pour envoyer un message de radiomessagerie au NE d'accès obtenu ou au GW d'accès obtenu à téléavertir ;
l'unité d'obtention du NE de radiomessagerie étant en outre configurée pour obtenir un CSG ID à téléavertir, l'unité d'obtention de NE de radiomessagerie (82) étant configurée pour déterminer si un ID de zone d'emplacement correspondant au CSG ID dans une liste de CSG autorisés de l'UE est dans une liste de mobilité de l'UE ; si l'ID d'emplacement est dans la liste de mobilité, l'unité d'obtention de NE de radiomessagerie (82) étant configurée pour prendre le CSG ID comme le CSG ID à téléavertir ; et si le CSG ID pris en charge par le NE d'accès ou le GW d'accès correspond au CSG ID à téléavertir, le NE de gestion étant configuré pour prendre le NE d'accès ou le GW d'accès comme le NE d'accès ou le GW d'accès à téléavertir ;
le NE de gestion étant en outre configuré pour : générer une table de données de CSG ID selon le CSG ID rapporté par le NE d'accès, la table comportant le CSG ID et des informations concernant le NE d'accès correspondant au CSG ID ; et obtenir les informations concernant le NE d'accès correspondant au CSG ID en consultant la table de données selon le CSG ID à téléavertir.

6. Système de communication, comprenant :
un élément de réseau NE d'accès (1101), configuré pour rapporter un ID de groupe fermé d'abonnés CSG, pris en charge par le NE d'accès (1101) à un NE de gestion (1102) ; recevoir un message de radiomessagerie à partir du NE de gestion (1102), et envoyer le message de radiomessagerie ;
le NE de gestion (1102) est configuré pour recevoir le CSG ID pris en charge par le NE d'accès (1101), obtenir un NE d'accès à téléavertir selon le CSG ID pris en charge par le NE d'accès (1101) ; et envoyer un message de radiomessagerie au NE d'accès obtenu à téléavertir ;
le NE de gestion (1102) obtenant le NE d'accès à téléavertir selon le CSG ID pris en charge par le NE d'accès (1101) étant configuré pour : obtenir un CSG ID à téléavertir, et déterminer si un ID de zone d'emplacement correspondant au CSG ID dans une liste de CSG autorisés de l'UE est dans une liste de mobilité de l'UE ; si l'ID d'emplacement est dans la liste de mobilité, le NE de gestion (1101) étant configuré pour prendre le CSG ID comme le CSG ID à téléavertir ; si le CSG ID pris en charge par le NE d'accès correspond au CSG ID à téléavertir, le NE d'accès étant le NE d'accès à téléavertir ;
le NE de gestion (1102) étant en outre configuré pour : générer une table de données de CSG ID selon le CSG ID rapporté par le NE d'accès, la table comportant le CSG ID et des informations concernant le NE d'accès correspondant au CSG ID ; et
obtenir le NE d'accès à téléavertir en consultant la table de données selon le CSG ID à téléavertir.

7. Système selon la revendication 6, dans lequel le NE d'accès comprend au moins un élément parmi un nœudB local, un nœudB évolué local, un point d'accès sans fil non 3GPP local, un nœudB prenant en charge la fonction CSG, un nœudB évolué, et un point d'accès sans fil non 3GPP.
